# EUROPÄISCHE PATENTSCHRIFT

(11) **EP 2 396 352 B1**
(45) Veröffentlichungstag und Bekanntmachung des Hinweises auf die Patenterteilung: **22.05.2019**
(21) Anmeldenummer: 10703419.1
(22) Anmeldetag: 05.02.2010
(51) Int. Cl.: C08F 10/14, C08F 210/14, C08K 5/00, C08K 5/09

(54) **WACHSE MIT HOHER POLARITÄT UND IHRE VERWENDUNG ALS GLEITMITTEL FÜR CHLORHALTIGE THERMOPLASTE**
WAXES HAVING HIGH POLARITY AND THE USE THEREOF AS SLIP AGENTS FOR CHLORINE-CONTAINING THERMOPLASTICS
CIRES À POLARITÉ ÉLEVÉE ET LEUR UTILISATION COMME LUBRIFIANT POUR DES MATIÈRES THERMOPLASTIQUES À TENEUR EN CHLORE

(30) Priorität: 10.02.2009 DE 102009008257
(43) Veröffentlichungstag der Anmeldung: 21.12.2011
(73) Patentinhaber: Clariant International Ltd, 4132 Muttenz (CH)
(72) Erfinder: HOHNER, Gerd, 86368 Gersthofen (DE); TREFFLER, Beate, 86356 Neusäß (DE)
(74) Vertreter: Kuba, Stefan
(86) Internationale Anmeldenummer: PCT/EP2010/000720
(87) Internationale Veröffentlichungsnummer: WO 2010/091825

(56) Entgegenhaltungen:
- DE-A1- 3 003 797
- GB-A- 1 245 879
- US-A- 4 358 573

## Beschreibung

Die Erfindung betrifft Wachse mit hoher Polarität, hergestellt durch radikalisch initiierte Umsetzung von langkettigen Olefinkohlenwasserstoffen mit ungesättigten Polycarbonsäuren oder deren Anhydriden, ferner die Verwendung solcher Wachse als Verarbeitungshilfsmittel für chlorhaltige Thermoplaste.

Bei der Verarbeitung thermoplastischer Kunststoffe werden üblicherweise Gleitmittel eingesetzt, die einerseits das Fließverhalten der Polymerschmelze verbessern und andererseits deren Klebeneigung an den metallischen Teilen der Verarbeitungsmaschinen vermindern sollen. Eine besondere Bedeutung besitzen Gleitmittel bei der Verarbeitung von chlorhaltigen Thermoplasten wie z. B. Polyvinylchlorid (PVC), da solche Kunststoffe wegen ihrer Empfindlichkeit gegen Temperaturbelastungen und hohe Scherkräfte sowie wegen ihrer ausgeprägten Klebeneigung nicht ohne Gleitmittel verarbeitet werden können.

Bei Gleitmitteln unterscheidet man zwischen solchen, die mit der Polymerschmelze gut verträglich sind und daher vor allem fließverbessernd wirken (innere Gleitmittel) und solchen, die eine mehr oder minder starke Unverträglichkeit besitzen und sich daher an den Phasengrenzen anreichern und dort Trennwirkung entfalten (äußere Gleitmittel).

Zur Verbesserung des Fließverhaltens von PVC-Schmelzen steht eine Vielzahl von Produkten mit innerer Gleitwirkung zur Verfügung, beispielsweise Fettalkohole, Fettsäuren, Fettsäurevoll- oder -partialester und Fettsäureamide.

Problematischer ist die Auswahl von Gleitmitteln mit äußerer oder kombinierter äußerer und innerer Gleitwirkung, an die zum Teil widersprüchliche Anforderungen gestellt werden. Um wirksam zu sein, müssen sie eine gewisse Unverträglichkeit mit der PVC-Schmelze aufweisen, damit ein trennwirksamer Film zwischen der Schmelze und den Metallteilen der Verarbeitungsmaschinen entstehen kann. Unverträgliche Additive haben jedoch den Nachteil, dass sie das Endprodukt häufig stark trüben. Bei den zahlreichen Anwendungen, bei denen ein hochtransparentes Endprodukt gewünscht wird, ist deswegen die Einsatzmenge eines Trennmittels häufig derartig limitiert, dass seine Wirkung nicht ausreicht. Besonders nachteilig ist dies bei der Herstellung von dünnen PVC-Kalanderfolien, da deren Klebeneigung und geringe thermische Belastbarkeit im heißen Zustand zur Loslösung von den Walzen einerseits einen hohen Gleitmitteleinsatz erfordert, andererseits aber an derartige Folien, z. B. im Verpackungssektor, besonders hohe Transparenzanforderungen gestellt werden.

Eine weitere Voraussetzung für die Einsetzbarkeit von Gleitmitteladditiven besteht in einer ausreichend niedrigen Flüchtigkeit und hohen thermischen Stabilität unter den Verarbeitungsbedingungen. Es muss ausgeschlossen sein, dass die Additive sich bei den üblichen Kalandrier-, Extrudier- oder Spritzgießtemperaturen verflüchtigen können, sei es, weil sie zu hohe Dampfdrucke, etwa aufgrund geringer Molekülgröße aufweisen, sei es, weil infolge unzureichender chemischer Thermostabilität flüchtige Zersetzungsprodukte entstehen. Die Flüchtigkeit kann auf einfache Weise z. B. über eine thermogravimetrische Analyse (TGA) erfasst werden. Von Bedeutung für die Qualität eines Gleitmitteladditivs ist darüber hinaus, dass es bei der Anwendung nicht zu einer Verfärbung der Kunststoffmasse kommt. Erfahrungsgemäß hat bereits die Eigenfarbe des Additivs erheblichen Einfluss auf die Farbe der Endartikel.

Feste Gleitmittel werden üblicherweise in Form von Pulvern eingesetzt, die durch Sprühung oder Vermahlung hergestellt werden. Soweit Mahlverfahren zur Anwendung kommen, ist es erforderlich, dass die Produkte eine gewisse Härte aufweisen, um die Mahlbarkeit auf üblichen industriellen Mühlen zu gewährleisten. Für die Charakterisierung der Härteeigenschaften stehen Verfahren wie beispielsweise die Messung der Stempelpenetration zur Verfügung.

Bekannte Gleitmittel für die Herstellung von weichmacherfreien PVC-Folien sind Montanwachse. Diese zeigen zwar ein ausgeglichenes Wirkungsprofil, sind in der Herstellung jedoch aufwändig. Ausgangsprodukt ist hier Rohwachs, das durch Lösemittelextraktion aus wachshaltiger Braunkohle gewonnen wird und dessen Zusammensetzung aufgrund seiner natürlichen Herkunft schwanken kann. Die weitere Verarbeitung erfolgt nach zusätzlicher extraktiver Reinigung durch kostenintensive Behandlung mit Chromschwefelsäure, wobei als Folge tiefgreifender chemischer Veränderungen Produktgemische resultieren, die überwiegend aus langkettigen Carbonsäuren bestehen. Diese wiederum werden in nachfolgenden Syntheseschritten zu Wachsestern bzw. -seifen umgesetzt, die als "teilsynthetische" Wachse für die Gleitmittelanwendung zum Einsatz kommen.

Weiterhin als PVC-Gleitmittel bekannt sind sog. Komplex- oder Mischester aus aliphatischen oder aromatischen Dicarbonsäuren mit 2 bis 22 Kohlenstoffatomen, aliphatischen Polyolen mit 2 bis 6 Hydroxylgruppen und aliphatischen Monocarbonsäuren mit 12-30 C-Atomen (GB 1292548) sowie Mischester aus aliphatischen Diolen, aliphatischen oder aromatischen Polycarbonsäuren mit 2 bis 6 Carboxylgruppen und aliphatischen monofunktionellen Alkoholen mit 12 bis 30 Kohlenstoffatomen (GB 1450273).

In EP 0 545 306 werden als PVC-Gleitmittel geeignete Copolymerisate beschrieben, die sich aus C₁₂-C₆₀-alfa-Olefinen, ungesättigten Monocarbonsäuren, ungesättigten Monocarbonsäurestern und optional Styrol, mithin aus mindestens drei unterschiedlichen Monomeren ableiten.

Ferner sind PVC-Gleitmittel bekannt, die durch Copolymerisation von längerkettigen alfa-Olefinen und Maleinsäureanhydrid zugänglich sind. Beispielsweise werden in DE-OS 2 748 367 Copolymere aus Olefinen mit 8 bis 24 C-Atomen und Maleinsäureanhydrid offenbart. Diese Produkte zeigen vergleichsweise hohe Flüchtigkeitswerte und sind weich, sodass eine Konfektionierung durch Vermahlung nicht in Frage kommt.

In DE-OS 3 003 797 wird ein Verfahren zum Verformen von Kunststoffen, speziell von PVC beschrieben. Als Gleitmittel wird ein durch Veresterung derivatisiertes Copolymeres aus ungesättigten Polycarbonsäuren bzw. deren Anhydriden mit alfa-Olefinen verwendet. Neben den erfindungsgemäßen Esterprodukten wird in einem der Ausführungsbeispiele auch ein nichtderivatisiertes Copolymeres aus C₃₀+-Olefin und Maleinsäureanhydrid als Gleitmittel in PVC eingesetzt. Die Herstellung des Copolymeren erfolgt durch Umsetzung des Olefins mit, bezogen auf eingesetztes C₃₀+-Olefin, 23,3 Gew.-% Maleinsäureanhydrid und 1,9 Gew.-% Di-tert.-butylperoxid. Das Produkt weist eine vergleichsweise dunkle Eigenfarbe auf und führt beim Einsatz in PVC zu Formmassen mit hohem Yellowness-Index.

Die oben genannten Materialien sind zwar als PVC-Gleitmittel mehr oder minder wirksam, zeigen aber in einzelnen Aspekten Nachteile.

Umsetzungsprodukte aus langkettigen alfa-Olefinen mit Maleinsäureanhydrid sind weiterhin beschrieben in DE-OS 3 510 233.

In EP 1 693 047 werden Copolymerwachse für kosmetische Zubereitungen offenbart, hergestellt aus C₂₆-C₆₀-alfa-Olefinen und Maleinsäureanhydrid.

Überraschend wurde nun gefunden, dass Copolymerwachse, hergestellt aus langkettigen alfa-Olefinen und Polycarbonsäuren oder deren Anhydriden, in besonders vorteilhafter Weise als PVC-Gleitmittel geeignet sind, wenn sie unter bestimmten Bedingungen hergestellt werden und spezielle Eigenschaften aufweisen.

Gegenstand der vorliegenden Erfindung ist die Verwendung gemäß Anspruch 1.

Als alfa-Olefine kommen solche mit Kettenlängen von 28 bis 60, bevorzugt von 30 bis 60 C-Atomen in Frage. Es können sowohl kettenreine Olefine als auch Olefingemische eingesetzt werden, wie sie z. B. in den bekannten Herstellverfahren bei der katalytischen Oligomerisation von Ethylen als Destillationsschnitte oder Destillationsrückstände anfallen. Technische alfa-Olefingemische, insbesondere solche mit höherer Kettenlänge, können neben 1-Alkenen mehr oder minder hohe Mengen innen- und seitenständige olefinische Doppelbindungen (Vinylen- und Vinylidengruppen) enthalten.

Repräsentative Beispiele für die zur Umsetzung mit den alfa-Olefinen verwendeten ungesättigten Polycarbonsäuren bzw. Anhydride sind Maleinsäure, Fumarsäure, Citraconsäure, Mesaconsäure, Aconitsäure oder Itaconsäure bzw. die Anhydride dieser Polycarbonsäuren, soweit zugänglich. Bevorzugt ist Maleinsäureanhydrid. Es können auch Mischungen dieser Polycarbonsäuren und/oder Anhydriden in beliebigen Verhältnissen eingesetzt werden. Das Einsatzverhältnis der Polycarbonsäuren bzw. Anhydride zur Eduktkomponente alfa-Olefin liegt zwischen 1:8 und 1:5, bevorzugt zwischen 1:7 und 1:5,5 Gewichtsteilen. Dementsprechend liegt der Einsatz von Polycarbonsäure bzw. Anhydrid, bezogen auf alfa-Olefin, zwischen 12,5 und 20 Gew.-%, bevorzugt zwischen 14,3 und 18,2 Gew.-%.

Die Herstellung der erfindungsgemäßen Gleit- und Trennmittel erfolgt in an sich bekannter Weise durch Umsetzung der o. g. Komponenten bei erhöhter Temperatur unter Zusatz von organischen oder anorganischen radikalbildenden Initiatoren. Die Reaktion kann in Gegenwart oder in Abwesenheit eines Lösungsmittels durchgeführt werden. Letzteres Verfahren ist bevorzugt. Weiterhin kann die Umsetzung sowohl diskontinuierlich batchweise, z. B. im Rührkessel oder aber in einem kontinuierlich arbeitenden Reaktor durchgeführt werden.

Geeignete organische Initiatoren sind z. B. Peroxide, beispielsweise Alkylhydroperoxide oder Dialkyl- oder Diarylperoxide, Diaroylperoxide, Perester oder Azoverbindungen. Bevorzugt sind Dialkylperoxide, speziell bevorzugt ist Di-tert.-butylperoxid. Es kommt jedoch auch jeder andere Initiator in Frage, sofern er bei der gewählten Reaktionstemperatur in Radikale zerfällt und die Reaktion in Gang zu setzen vermag.

Die Reaktionstemperaturen liegen, wenn die Reaktion in Abwesenheit von Lösungsmittel durchgeführt wird, oberhalb der Schmelztemperatur des alfa-Olefins, z. B. zwischen 100 und 200 °C, bevorzugt 120 bis 180 °C, besonders bevorzugt 140 bis 170 °C.

Die erfindungsgemäß verwendeten Copolymerwachse werden als Gleit- oder Trennmittel in chlorhaltigen Thermoplasten, z. B. Polyvinylchlorid eingesetzt, welche nach bekannten Verfahren - beispielsweise Suspensions-, Masse-, Emulsionspolymerisation - hergestellt werden können. Sie sind außer für Polyvinylchlorid auch für Mischpolymere des Vinylchlorids mit bis zu 30 Gew.-% Comonomeren geeignet, beispielsweise Vinylacetat, Vinylidenchlorid, Vinylether, Acrylnitril, Acrylsäureester, Malein-Mono- oder -Diestern oder Olefinen sowie für Pfropfcopolymerisate des PVCs.

Die Dosiermenge beträgt 0,05 bis 5,0 Gew.-%, bezogen auf das Polymere. Basiert die Formmasse auf M- oder S-PVC (Masse- oder Suspensions-PVC), so beträgt die Dosiermenge vorzugsweise 0,05 bis 1 Gew.-%, basiert sie auf E-PVC (Emulsions-PVC), so ist diese Menge vorzugsweise 1,0 bis 5, insbesondere 2 bis 4 Gew.-%, jeweils bezogen auf das Polymere. Das Einmischen der erfindungsgemäßen Copolymeren in die Polymeren geschieht auf die übliche Weise während der Herstellung oder Verarbeitung der Formmassen.

Neben den erfindungsgemäßen Copolymerwachsen kann die PVC-Masse zusätzlich Füllstoffe, Wärmestabilisatoren, Antioxidantien, Lichtschutzmittel, Antistatika, Flammschutzmittel, Verstärkungsstoffe, Pigmente, Farbstoffe, Verarbeitungshilfsmittel, Gleitmittel, Schlagzähmacher, Treibmittel oder optische Aufheller in üblichen Mengen enthalten.

### Beispiele:

Die Schmelzviskositäten wurden nach DIN 53019-2 mit einem Rotationsviskosimeter, die Tropfpunkte nach DIN ISO 2176 bestimmt. Die Säurezahlbestimmung erfolgte nach DIN 53402, mit dem Unterschied, dass die verwendeten Lösemittel Xylol und Ethanol in wasserfreier Form eingesetzt wurden, um eine hydrolytische Aufspaltung der Anhydridgruppen zu vermeiden. Die Verseifungszahl wurde entsprechend der DIN-Norm 53401 gemessen. Die Bestimmung der Jodzahl erfolgte nach der DIN-Norm 14111, die der Jodfarbzahl nach DIN 6162. Die TGA-Messungen wurden mit einem Mettler-Gerät SD TA 551e durchgeführt (Temperaturprogramm: Aufheizen von Raumtemperatur bis 300 °C, Heizgeschwindigkeit 5°/min, Stickstoffstrom 50 ml/min). Die Stempelpenetration als Maß für die Härte wurde nach der DGF-Methode M-III 9e gemessen (s.a. Fiebig, Braun, Fett/Lipid 98, 1996, Nr. 2, 86).

### Herstellung der Copolymerwachse

2500 g alfa-Olefin C₃₀+ (Gemisch aus Olefinkohlenwasserstoffen mit Kettenlängen im Wesentlichen von >= 30 C-Atomen; Handelsprodukt der Fa. ChevronPhillips) werden in einer mit Rührwerk, Innenthermometer und Destillationsbrücke ausgestatteten Glasapparatur unter Stickstoffüberlagerung aufgeschmolzen. Anschließend wurde die in Tab. 1 angegebene Menge an Maleinsäureanhydrid - verteilt auf sechs gleiche Portionen in Abständen von jeweils 30 min - zudosiert. Innerhalb des gleichen Zeitraums wurde aus einem Tropftrichter kontinuierlich Di-tert.-butylperoxid zugegeben. Anschließend ließ man 1 h nachreagieren. Hierauf wurden flüchtige Anteile wurden im Vakuum (ca. 30 mbar) abdestilliert. Nach ca. 30 min wurde durch Einleiten von Stickstoff auf Normaldruck entspannt. Die Daten der resultierenden Copolymerwachse sind in Tabelle 1 aufgelistet.

### Vergleichsbeispiele:

Literaturbekannte Copolymere aus C₃₀+-Olefin und Maleinsäureanhydrid wurden entsprechend den in DE-OS 3 003 797, Beispiel 1, DE-OS 3 510 233, Beispiel 1 sowie EPA 1 693 047, Bsp. A (Copolymerwachs 1) angegebenen Vorschriften hergestellt. Die gemessenen Daten sind in Tabelle 2 aufgeführt.

**Tabelle 1: Copolymerwachse aus C₃₀+-Olefin und Maleinsäureanhydrid**

| Beispiel | Einsatzmenge Maleinsäureanhydrid¹⁾ | Einsatzmenge Di-tert.-butylperoxid¹⁾ | Reaktionstemp. | Säurezahl | Viskosität/ 100 °C | Jodzahl | Jodfarbzahl | Tropfpunkt | Stempelpenetration | TGA Massenverlust bei 260 °C |
|---|---|---|---|---|---|---|---|---|---|---|
| 1 | 15,0 | 2,0 | 160 | 80 | 329 | 8,0 | 3,9 | 74 | 410 | 2,0 |
| 2 | 15,0 | 3,0 | 160 | 83 | 608 | 7,1 | 2,9 | 72 | 540 | 2,6 |
| 3 | 18,0 | 3,0 | 160 | 93 | 2767 | 6 | 3,7 | 73 | 535 | 2,7 |
| V1 (nicht erfindungsgemäß) | 15,0 | 1,0 | 160 | 78 | 260 | 16 | 2,7 | 73 | 337 | 3,7 |
| | Gew.-% | Gew.-% | °C | mg KOH/g | mPa*s | g I2/100 g | | °C | bar | Gew.-% |

| | | | | | | | | | | |
|---|---|---|---|---|---|---|---|---|---|---|
| ¹⁾ bezogen auf eingesetztes C₃₀+-Olefin | | | | | | | | | | |

**Tabelle 2: Copolymerwachse aus C₃₀+-Olefin und Maleinsäureanhydrid entsprechend dem Stand der Technik**

| Vergleichsbeispiel | Einsatzmenge Maleinsäureanhydrid¹⁾ | Einsatzmenge Di-tert.-butylperoxid¹⁾ | Reaktionstemp. | Säurezahl | Viskosität/100 °C | Jodzahl | Jodfarbzahl | Tropfpunkt | TGA Massenverlust bei 260 °C |
|---|---|---|---|---|---|---|---|---|---|
| V2 (entspr. DE 3510233, Bsp. 1) | 15,0 | 0,4 | 180 | 77 | 162 | 18 | 3,8 | 73 | 4,9 |
| V3 (entspr. DE3003797, Bsp. 1) | 23,3 | 1,9 | 200 | 111 | 1498 | 5,2 | 12 | 74 | 2,1 |
| V4 (entspr. EP 1693047 Bsp. A/Copolymerwachs 1) | 18,4 | 0,92 | 160 | 92 | 428 | 9 | 9,2 | 74 | 4,4 |
| | Gew.-% | Gew.-% | °C | mg KOH/g | mPa*s | g 12/100 g | | °C | Gew.-% |

| | | | | | | | | | |
|---|---|---|---|---|---|---|---|---|---|
| ¹⁾ bezogen auf eingesetztes C₃₀+-Olefin | | | | | | | | | |

### Vergleichsbeispiel V5:

Es wurde ein Copolymerwachs aus C₃₀+-Olefin, Methylacrylat und Acrylsäure analog EP 0 545 306, Beispiel 1 hergestellt. Im Unterschied zum beschriebenen Beispiel wurde anstelle von C₂₄-C₆₀)-Olefin ein C₃₀+-Olefin eingesetzt. Die sonstigen Komponenten wie auch die Mengenverhältnisse, Reaktionsbedingungen und Verfahrensweisen wurden beibehalten.

Das Copolymerwachs zeigte folgende Kennzahlen:

| | | |
|---|---|---|
| Säurezahl: | 12 | mg KOH/g |
| Verseifungszahl: | 163 | mg KOH/g |
| Tropfpunkt: | 73 | °C |
| Viskosität bei 90°C: | 610 | mPa*s |

Für die anwendungstechnischen Prüfungen (Vergleichsbeispiele) wurden folgende handelsübliche PVC-Gleitmittel eingesetzt:

| | Hersteller | TGA Massenverlust bei 260°C |
|---|---|---|
| Licowax E | Clariant | 4,0 |
| Loxiol G 74 | Cognis | 14,6 |
| | | Gew.-% |

### Anwendungstechnische Prüfungen

Es wurden PVC-Rezepturen entsprechend der in Tabelle 3 angegebenen Zusammensetzung nach Vormischen in einem Labormischer auf einem Collin-Messwalzwerk vom Typ 150 M (Dr. Collin GmbH) zu Walzfellen verarbeitet. Dabei wurden jeweils 220 g des additivierten jeweiligen PVC-Gemisches eingesetzt, die Verarbeitungstemperatur betrug 195 °C. Nach 20 min Laufzeit wurden die Klebkraft und der Yellowness-Index (YI) gemessen. Die Mischungen der jeweiligen Testrezepturen wurden ferner zu Platten mit einer Schichtdicke von 2 mm verpresst (Collin Labor-Plattenpresse 200P, Presstemperatur 180 °C, Pressdruck 200 bar). Die Transparenz dieser Platten wurde vermessen.

**Tabelle 3: PVC-Testrezeptur**

| | |
|---|---|
| PVC S 3160 (K-Wert 60, Vinnolit) | 100 |
| Kane Ace B 58 (Schlagzähmacher, Kaneka) | 5 |
| Mark 17 MOK (Zinnstabilisator, Crompton) | 1,5 |
| Paraloid K 120N (Verarbeitungshilfsmittel, Rohm und Haas) | 1 |
| Loxiol G 16 (Glycerindioleat, Cognis) | 0,5 |
| Gleitmittel gemäß Tabellen 1-3 | 0,3 |
| | phr |

**Tabelle 4: Ergebnisse der anwendungstechnischen Prüfungen**

| | Yellowness Index nach 20 min | Klebekraft nach 20 min | Transparenz |
|---|---|---|---|
| Copolymerwachs aus Beispiel 1 | 28 | 3,9 | 80 |
| Copolymerwachs aus Beispiel 3 | 23 | 4,7 | 79 |
| | | | |
| Licowax E | 35 | 6,2 | 83 |
| Loxiol G 74 | klebt | klebt | 83 |
| V1 | 30 | 6,3 | 77 |
| V3 | 43 | 4,6 | 73 |
| V5 | klebt | klebt | 80 |

## Patentansprüche

1. Verwendung von Copolymerwachsen, **gekennzeichnet durch** eine Jodzahl von < 15 g Jod/100 g, gemessen nach DIN-Norm 14111,
eine Viskosität bei 100 °C zwischen 200 und 4000 mPa·s, gemessen nach DIN 53019-2, einen Tropfpunkt zwischen 60 und 90°C, bestimmt nach DIN ISO 2176,
eine Stempelpenetrationshärte zwischen 200 und 600 bar, gemessen nach der DGF-Methode M-III9e,
eine Säurezahl zwischen 60 und 100 mg KOH/g, gemessen nach DIN 53402, sowie
eine Jodfarbzahl < 10, gemessen nach DIN 6162,
als Gleit- oder Trennmittel für PVC, Polyvinylidenchlorid bzw. Mischpolymere des Vinylchlorids mit bis zu 30 Gew.-% Comonomeren, letztere ausgewählt aus der Gruppe Vinylacetat, Vinylidenchlorid, Vinylether, Acrylnitril, Acrylsäureester, Maleinsäure-Mono- oder -Diestern oder Olefinen sowie für Propfcopolymerisate des PVC.

2. Verwendung von Copolymerwachsen nach Anspruch 1, **dadurch gekennzeichnet, dass** die Jodzahl < 13 g Jod/100 g ist, gemessen nach DIN-Norm 14111.

3. Verwendung von Copolymerwachsen nach einem der vorhergehenden Ansprüche, **dadurch gekennzeichnet, dass** die Dosiermenge des Copolymerwachses 0,05 bis 5,0 Gew.-% beträgt, bezogen auf das PVC, Polyvinylidenchlorid bzw. besagte Mischpolymere des Vinylchlorids.

4. Verwendung nach Anspruch 3, als Gleit- oder Trennmittel für eine auf Masse- oder Suspensions-PVC basierende Formmasse, **dadurch gekennzeichnet, dass** die Dosiermenge 0,05 bis 1 Gew.-% beträgt, bezogen auf eine auf Masse- oder Suspensions- PVC basierende Formmasse.

5. Verwendung nach Anspruch 3, als Gleit- oder Trennmittel für eine auf Emulsions-PVC basierende Formmasse, **dadurch gekennzeichnet, dass** die Dosiermenge 1,0 bis 5 Gew.-% beträgt, bezogen auf eine auf Emulsions-PVC basierende Formmasse.

## Claims

1. Use of copolymer waxes, **characterized by** an iodine number of < 15 g iodine/100 g measured according to DIN standard 14111, a viscosity at 100°C between 200 and 4000 mPa·s measured according to DIN 53019-2, a dropping point between 60°C and 90°C determined according to DIN ISO 2176, an indenter penetration hardness between 200 and 600 bar measured according to DGF method M-III 9e,
an acid number between 60 and 100 mg KOH/g measured according to DIN 53402 and
an iodine colour number of <10 measured according to DIN 6162,
as a lubricating or release agent for PVC, polyvinylidene chloride or copolymers of vinyl chloride comprising up to 30% by weight of comonomers, the latter selected from the group of vinyl acetate, vinylidene chloride, vinyl ether, acrylonitrile, acrylic esters, maleic acid monoesters or diesters of olefins, and also for graft copolymers of PVC.

2. Use of copolymer waxes according to Claim 1, **characterized in that** the iodine number is <13 g iodine/100 g measured according to DIN standard 14111.

3. Use of copolymer waxes according to either of the preceding claims, **characterized in that** the addition amount of the copolymer wax is 0.05% to 5.0% by weight based on the PVC, polyvinylidene chloride or said copolymers of vinyl chloride.

4. Use according to Claim 3 as a lubricating or release agent for a moulding material based on bulk or suspension PVC, **characterized in that** the addition amount is 0.05% to 1% by weight based on a moulding material based on bulk or suspension PVC.

5. Use according to Claim 3 as a lubricating or release agent for a moulding material based on emulsion PVC, **characterized in that** the addition amount is 1.0% to 5% by weight based on a moulding material based on emulsion PVC.

## Revendications

1. Utilisation de cires de copolymères, **caractérisée par**
un indice d'iode < 15 g d'iode/100 g, mesuré selon la norme DIN 14111,
une viscosité à 100 °C comprise entre 200 et 4 000 mPa·s, mesurée selon DIN 53019-2,
un point de goutte compris entre 60 et 90 °C, déterminé selon DIN ISO 2176,
une dureté à la pénétration d'un poinçon comprise entre 200 et 600 bar, mesurée par la méthode DGF M-III 9e,
un indice d'acidité compris entre 60 et 100 mg de KOH/g, mesuré selon DIN 53402, et
un indice de couleur d'iode < 10, mesuré selon DIN 6162, en tant qu'agent lubrifiant ou démoulant pour le PVC, le polychlorure de vinylidène ou les copolymères de chlorure de vinyle avec jusqu'à 30 % en poids de comonomères, ces derniers étant choisis dans le groupe constitué par l'acétate de vinyle, le chlorure de vinylidène, l'éther de vinyle, l'acrylonitrile, les esters de l'acide acrylique, les mono- ou diesters de l'acide maléique ou les oléfines, ainsi que pour les copolymères greffés de PVC.

2. Utilisation de cires de copolymères selon la revendication 1, **caractérisée en ce que** l'indice d'iode est < 13 g d'iode/100 g, mesuré selon la norme DIN 14111.

3. Utilisation de cires de copolymères selon l'une quelconque des revendications précédentes, **caractérisée en ce que** la quantité ajoutée de la cire de copolymère est de 0,05 à 5,0 % en poids, par rapport au PVC, au polychlorure de vinylidène ou auxdits copolymères de chlorure de vinyle.

4. Utilisation selon la revendication 3, en tant qu'agent lubrifiant ou démoulant pour un matériau de moulage à base de PVC en masse ou en suspension, **caractérisée en ce que** la quantité ajoutée est de 0,05 à 1 % en poids, par rapport au matériau de moulage à base de PVC en masse ou en suspension.

5. Utilisation selon la revendication 3, en tant qu'agent lubrifiant ou démoulant pour un matériau de moulage à base de PVC en émulsion, **caractérisée en ce que** la quantité ajoutée est de 1,0 à 5 % en poids, par rapport à un matériau de moulage à base de PVC en émulsion.
